# EUROPEAN PATENT APPLICATION

(11) **EP 2 505 818 A1**
(43) Date of publication of application: **03.10.2012**
(21) Application number: 10833293.3
(22) Date of filing: 25.11.2010
(51) Int. Cl.: F02M 25/07, F01N 3/24, F02B 37/00, F02D 21/08, F02D 23/00

(54) **EXHAUST GAS TREATMENT DEVICE**

(30) Priority: 27.11.2009 JP 2009270762
(71) Applicant: Mitsubishi Heavy Industries, Ltd., Tokyo 108-8215 (JP)
(72) Inventor: ISHIDA, Hiroyuki, Tokyo 108-8215 (JP); OSAFUNE, Shinnosuke, Tokyo 108-8215 (JP)
(74) Representative: HOFFMANN EITLE
(86) International application number: PCT/JP2010/071062
(87) International publication number: WO 2011/065447

(57) **Abstract**

An object is to improve a NOₓ reduction effect by allowing an increase in the amount of exhaust gas circulated to an intake pipe and also achieve energy conservation and a CO₂ reduction by reducing a power consumption amount when NOₓ in exhaust gas of a diesel engine equipped with a turbocharger is removed by using an EGR system. An EGR conduit 32 that returns a part of exhaust gas e to an intake collecting pipe 13 is provided in an exhaust pipe 16 of a marine diesel engine 10A. An EGR valve 34, an EGR scrubber 36, and an EGR blower 38 are provided in the EGR conduit 32. A transmission shaft 26 of a turbocharger 20 is provided with an electric generator 40, and electric power generated by the electric generator 40 is sent to a drive motor 39 of the EGR blower 38 via a conductive wire 42 to drive the drive motor 39. An SCR catalytic converter 28 is provided in an exhaust pipe 28 on the downstream side of a turbine 22 to remove NOₓ in the exhaust gas e.

## Description

### TECHNICAL FIELD

The present invention relates to an exhaust gas treatment device that is suitably used to reduce a NOₓ amount in exhaust gas of a diesel engine equipped with a turbocharger, particularly a marine diesel engine.

### BACKGROUND ART

A diesel engine is superior to a gasoline engine in fuel efficiency, and hence the diesel engine is widely used as a marine engine, an automobile engine, and the like in the transportation industry. However, PM (Particulate Matter) such as unburned fuel and the like contained in exhaust gas and NOₓ (NO, NO₂ or the like) known as a nitrogen oxide present problems. To cope with the problems, as a unit for removing NOₓ from exhaust gas, there is known a method that removes NOₓ contained in exhaust gas by reducing NOₓ on a catalyst by ammonia gas obtained by hydrolysis of urea water. This method is known as an SCR (Selective Catalytic Reduction) system.

Patent Document 1 discloses the SCR system. In the SCR system, after removing PM and a gaseous hydrocarbon component in exhaust gas of a diesel engine on a prior stage side in an exhaust path, by causing ammonia gas and NOₓ to react with each other on an SCR catalyst provided on a subsequent stage side in an exhaust gas path, NOₓ is reduced and converted into nitrogen and water.

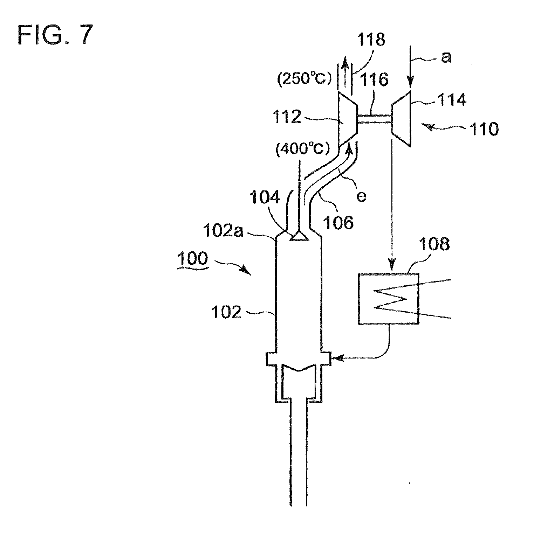

FIG. 7 schematically shows an air intake and exhaust device of a marine diesel engine 100. In FIG. 7, an exhaust valve 104 is provided inside a cylinder head 102a of a cylinder 102, and an exhaust pipe 106 is connected to the cylinder head 102a. A turbine 112 of a turbocharger 110 is provided in the exhaust pipe 106, and the turbine 112 is rotationally driven by exhaust gas e discharged from the cylinder head 102a. A compressor 114 of the turbocharger 110 is integrally connected to the turbine 112 via a transmission shaft 116, and rotates together with the turbine 112.

The compressor 114 rotates to take in and compress air to be compressed a. The air compressed in the compressor 114 is supplied to the cylinder 12 via an intake collecting pipe 113 after being cooled in an intercooler 108. Fuel (e.g., C heavy oil or the like) is injected to the cylinder 102 together with the compressed air, ignited by heat of compression generated by compression by a piston that is not shown, and drives the piston. Note that each of temperature values in FIG. 7 denotes an exhaust gas temperature in the exhaust pipe 106 or 108.
An SCR catalytic converter containing an SCR catalyst constituting the SCR system is usually provided in the exhaust pipe 118 on the downstream side of the turbine 112.

When the SCR catalytic converter is provided in the exhaust pipe 118 on the downstream side of the turbine, the temperature of exhaust gas flowing into the SCR catalytic converter 28 is as low as about 250°C, and does not reach about 320°C that is a temperature at which the SCR catalyst can normally exert its catalytic function. As a result, a problem occurs that the SCR catalyst cannot normally exert its catalytic function.

In order to solve the problem, it is considered that the SCR catalytic converter is disposed in the exhaust pipe 106 on the upstream side of the turbine that has an exhaust gas temperature of about 400°C. However, when the SCR catalytic converter is provided in the exhaust pipe 106, heat to be supplied to the turbine 112 is taken by the SCR catalyst having a large heat capacity, and hence there is the possibility that transient characteristics of the marine diesel engine 100 deteriorate.

To cope with this, in an internal combustion engine for an automobile and a marine diesel engine, as another unit for reducing NOₓ, an EGR (Exhaust Gas Recirculation) method is used. In the method, a part of exhaust gas (EGR gas) is diverted from an exhaust side to be returned to an intake side, and the occurrence of NOₓ is reduced by suppressing combustion in a cylinder using the exhaust gas returned to the intake side to lower a combustion temperature. In the EGR system, in order to smoothly introduce the exhaust gas into the cylinder or an intake path, it is necessary to increase the pressure of the exhaust gas to be slightly higher than an intake pressure in the cylinder or in the intake path (pressurization).

Patent Document 2 discloses a unit for smoothly recirculating the EGR gas to the intake pipe. In the unit disclosed in Patent Document 2, an electric generator sharing a rotation shaft with a turbine of a turbocharger is provided in the turbocharger in an internal combustion engine of an automobile provided with the turbocharger and the EGR system. The actuation of the electric generator functions as a resistance to brake the rotation shaft (braking torque). With this, the ventilation resistance of the exhaust gas on a turbine side is increased, and hence an exhaust pressure in an exhaust manifold on the upstream side of the turbine is increased, and the recirculation of the exhaust gas to the intake pipe is thereby facilitated.

Patent Document 3 discloses a unit in which, in an internal combustion engine equipped with a turbocharger that is provided with the EGR system, a blower unit such as an air compressor or the like is provided in a circulation pipe that circulates EGR gas to an intake pipe, and the amount of circulated EGR gas is increased by pressurizing and sending the EGR gas flowing in the circulation pipe by means of the blower unit.

[Patent Document 1] Japanese Patent Application Laid-open No. 2009-209896
[Patent Document 2] Japanese Patent Application Laid-open No. 2002-266649
[Patent Document 3] Japanese Patent Application Laid-open No. 2005-188359

Since the EGR system disclosed in Patent Document 2 is dependent on the braking (braking torque) effect by the electric generator, the pressure of the exhaust gas circulating to the intake pipe is not expected to significantly increase. In addition, there is a problem that the braking effect of the electric generator lowers driving efficiency of the turbine by the exhaust gas.
The EGR system disclosed in Patent Document 3 needs power for driving the blower unit such as the air compressor or the like, which runs counter to a current trend toward energy conservation and a CO₂ reduction.

### DISCLOSURE OF THE INVENTION

In view of such problems of the conventional art, an object of the present invention is to improve a NOₓ reduction effect by allowing an increase in the amount of exhaust gas circulated to an intake pipe, and also achieve energy conservation and a CO₂ reduction by reducing a power consumption amount when NOₓ in the exhaust gas of a diesel engine equipped with a turbocharger is removed by using the EGR system.

In order to achieve such object, an exhaust gas treatment device of the present invention is an exhaust gas treatment device which includes a circulation path that circulates a part of exhaust gas of a diesel engine equipped with a turbocharger to an intake path, and which is configured to reduce a combustion temperature by circulating the part of the exhaust gas to the intake path via the circulation path to thereby suppress occurrence of NOₓ, the exhaust gas treatment device further including a blower provided in the circulation path, and a power extraction device that is connected to a power transmission shaft of the turbocharger coupling a compressor and a turbine to obtain power from the power transmission shaft, wherein the blower is driven by the power extracted by the power extraction device to increase a pressure of the exhaust gas supplied to the intake path to be higher than an intake pressure.

In the device of the present invention, since the blower is provided in the circulation path that circulates the part of the exhaust gas to the intake path and the blower is driven by the power extraction device, it is possible to easily increase the pressure of the exhaust gas supplied to the intake path. As a result, it is possible to reliably supply the set amount of the exhaust gas to the intake path, and hence it is possible to reliably achieve a NOₓ reduction by an EGR system.
In addition, since the power for driving the blower is obtained from the turbocharger, a special drive device for driving the blower is not required. As a result, it is possible to contribute to energy conservation and a CO₂ reduction.

In the device of the present invention, the power extraction device is preferably an electric generator and the blower is preferably driven by electric power obtained by the electric generator. With this, it is possible to supply the electric power obtained by the electric generator to a drive motor of the blower via a conductive wire, and hence it is possible to simplify a power transmission unit and reduce the cost of the power transmission unit, and also reduce a power loss during transmission.

In the device of the present invention, the power extraction device is preferably a mechanical power transmission mechanism that transmits rotation of the power transmission shaft of the turbocharger to a drive shaft of the blower to drive the drive shaft. Thus, by transmitting the rotation of the power transmission shaft to the blower by using the mechanical power transmission mechanism including, e.g., a gear and a rotating shaft, it is possible to reliably transmit the rotation of the power transmission shaft to the drive shaft of the blower. In addition, by providing an acceleration device and a deceleration device in the mechanical power transmission mechanism, the acceleration or deceleration of the blower is facilitated, and hence it becomes easy to adjust the amount of the exhaust gas to be returned to an exhaust gas path.

In the device of the present invention, a correlation map that indicates a correlation among a load of the diesel engine, an exhaust gas circulation amount required in correspondence to the load, and a blower driving speed corresponding to the exhaust gas circulation amount is preferably pre-prepared, and a controller that controls the blower driving speed based on the correlation map is preferably provided. With this, it is possible to select the blower driving speed optimum for the reduction of a NOₓ amount in the exhaust gas in correspondence to the load of the diesel engine.

In the device of the present invention, the diesel engine is preferably a marine diesel engine, a position measurement device is preferably further provided that measures a navigation position of a ship on which the marine diesel engine is mounted, and the controller preferably controls the blower driving speed when the position measurement device detects an entry of the ship into exhaust emission control waters.
With this, when the ship navigates in the exhaust emission control waters, it is possible to perform an operation satisfying a exhaust emission control regulation value of the exhaust emission control waters.

In the device of the present invention, a catalytic converter containing a selective reduction catalyst is preferably provided in an exhaust gas path on a downstream side of the turbine of the turbocharger, to remove NOₓ in the exhaust gas flowing in the exhaust gas path on the downstream side. Thus, by using the EGR system and an SCR system in combination, it becomes possible to reduce the discharge amount of NOₓ in the exhaust gas to an extremely small amount.

According to the device of the present invention, in the exhaust gas treatment device which includes the circulation path that circulates the part of exhaust gas of the diesel engine equipped with the turbocharger to the intake path, and which is configured to reduce the combustion temperature by circulating the part of the exhaust gas to the intake path via the circulation path to thereby suppress occurrence of NOₓ, since the exhaust gas treatment device further includes the blower provided in the circulation path and the power extraction device that is connected to the power transmission shaft of the turbocharger coupling the compressor and the turbine to obtain the power from the power transmission shaft, and the blower is driven by the power extracted by the power extraction device to increase the pressure of the exhaust gas supplied to the intake path to be higher than the intake pressure, it is possible to easily increase the pressure of the exhaust gas supplied to the intake path. As a result, it is possible to reliably supply the exhaust gas to the intake path, and hence it is possible to reliably achieve the NOₓ reduction by the EGR system.
In addition, since the power for driving the blower is obtained from the turbocharger, a special drive device for driving the blower is not required and, as a result, it is possible to contribute to energy conservation and the CO₂ reduction.

### BRIEF DESCRIPTION OF THE DRAWINGS

FIG. 1 is a system diagram showing an exhaust system of a marine diesel engine according to a first embodiment of a device of the present invention;
FIG. 2 is a system diagram showing an exhaust system of a marine diesel engine according to a second embodiment of the device of the present invention;
FIG. 3 is a system diagram showing an exhaust system of a marine diesel engine according to a third embodiment of the device of the present invention;
FIG. 4 is a flowchart showing operational procedures of the third embodiment;
FIG. 5 is a pre-prepared correlation map showing a correlation between an engine load and an EGR ratio in the third embodiment;
FIG. 6 is a pre-prepared correlation map between the engine load and blower required power in the third embodiment; and
FIG. 7 is an explanatory view showing an exhaust gas system of a marine diesel engine.

### BEST MODE FOR CARRYING OUT THE INVENTION

A detailed description is given hereinbelow of the present invention by using embodiments shown in the drawings. Note that the scope of the invention is not limited only to dimensions, materials, shapes, and relative arrangements of constituent parts described in the embodiments unless specifically described.

### (First Embodiment)

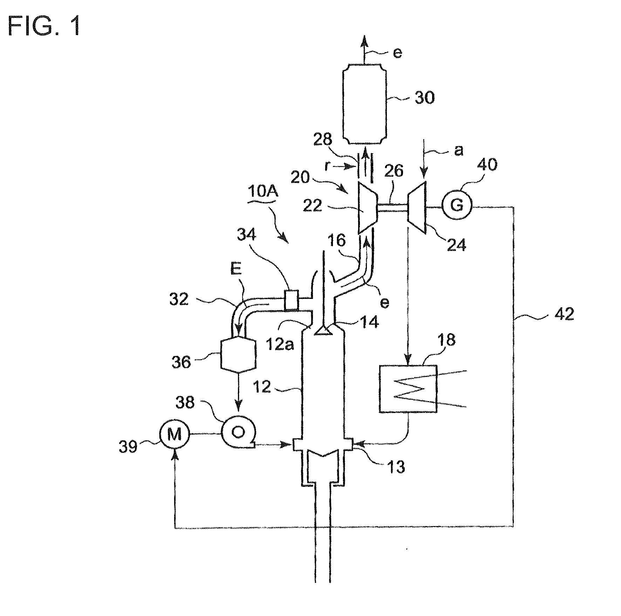

A description is given of a first embodiment in which the present invention is applied to a marine diesel engine on the basis of FIG. 1. In a marine diesel engine 10A of the present embodiment shown in FIG. 1, an exhaust valve 14 is provided inside a cylinder head 12a of a cylinder 12, and an exhaust pipe 16 is connected to the cylinder head 12a. A turbine 22 constituting a turbocharger 20 is provided in the exhaust pipe 16. The turbine 22 is rotationally driven by exhaust gas e discharged from the cylinder head 12a. A compressor 24 of the turbocharger 20 is integrally connected to the turbine 22 via a transmission shaft 26, and rotates together with the turbine 22.

When the turbine 22 rotates by the exhaust gas e, the compressor 24 rotates to take in and compress air to be compressed a. The air compressed by the compressor 24 is supplied to the cylinder 12 via an intake collecting pipe 13 after being cooled in an intercooler 18. To the cylinder 12, fuel (e.g., C heavy oil or the like) is injected together with the compressed air. The injected compressed air and fuel are ignited by heat of compression generated by compression by a piston that is not shown to drive the piston. In an exhaust pipe 28 on the downstream side of the turbine 22, an SCR catalytic converter 30 containing an SCR catalyst is provided.

In the cylinder head 12a, there is provided an EGR conduit 32 that diverts a part of the exhaust gas e from the exhaust pipe 16 and returns the part of the exhaust gas e to the cylinder 12. Into the EGR conduit 32, exhaust gas (EGR gas E) diverted from the exhaust gas e is flown. In the EGR conduit 32, an EGR valve 34, an EGR scrubber 36 that removes PM from the EGR gas E, and an EGR blower 38 that forcibly pressurizes and sends the exhaust gas E to the cylinder 12 are sequentially provided from the upstream side. The EGR scrubber 36 has a conventionally known structure.

To the transmission shaft 26 integrally coupling the turbine 22 and the compressor 24 in the turbocharger 20, an electric generator 40 is connected, and electric power is generated in the electric generator 40 by the rotation of the transmission shaft 26. The generated electric power is sent to a drive motor 39 of the blower 36 via a conductive wire 42 to drive the drive motor 39.

In the structure described above, PM mixed in the EGR gas E diverted into the EGR conduit 32 is removed by the EGR scrubber 36, and the EGR gas E is pressurized and sent by the EGR blower 38 to be returned into the cylinder 12. With this, it is possible to suppress the combustion in the cylinder 12 to reduce the combustion temperature, and the occurrence of NOₓ can be thereby reduced.

The exhaust gas e out of the cylinder 12 reaches the exhaust pipe 28. In the exhaust pipe 28, an aqueous reducing agent solution r such as an aqueous urea solution or an aqueous ammonia solution is sprayed. The aqueous reducing agent solutions r are evaporated by the potential heat of the exhaust gas e, and the aqueous urea solution among them is hydrolyzed into ammonia gas. The exhaust gas e having reached the SCR catalytic converter 30 reacts with the ammonia gas to be reduced on the SCR catalyst contained in the SCR catalytic converter 30, and is converted into nitrogen and water. Thus, the exhaust gas e whose NOₓ is removed is discharged to the outside.

According to the present embodiment, since the EGR gas E diverted into the EGR conduit 32 is pressurized and sent to the cylinder 12 by the EGR blower 38, it is possible to increase the pressure of the EGR gas E to be higher than the pressure in the cylinder 12. As a result, it is possible to reliably supply a set amount of the EGR gas E into the cylinder 12, whereby it is possible to reduce the combustion temperature in the cylinder 12 to reduce the occurrence of NOₓ. In addition, since the drive motor 39 of the EGR blower 38 is driven by the electric power generated by the electric generator 40, a special drive device is not required. As a result, it is possible to achieve energy conservation and suppress the occurrence of CO₂.

Further, since the unit for transmitting the electric power obtained by the electric generator 40 to the drive motor 39 is realized by a simple structure using only the conductive wire 42, it is possible to simplify the power transmission unit and reduce the cost of the power transmission unit, and also reduce a power loss during the transmission.

### (Second Embodiment)

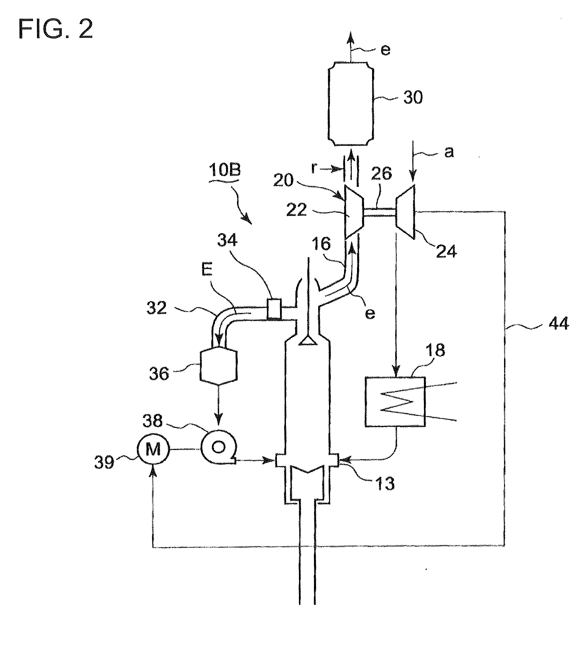

Next, a description is given of a second embodiment of the device of the present invention on the basis of FIG. 2. In a marine diesel engine 10B of the present embodiment shown in FIG. 2, in the present embodiment, by using a mechanical power transmission mechanism 44 using a gear and a rotating shaft, the rotation of the transmission shaft 26 is transmitted to a drive shaft of the EGR blower 38 that is not shown. Other structures of the present embodiment are the same as those of the first embodiment.

According to the present embodiment, by the use of the mechanical power transmission mechanism 44, it is possible to reliably transmit the rotation of the transmission shaft 26 to the drive shaft of the blower 38. In addition, it is easy to provide an acceleration device and a deceleration device in the mechanical power transmission mechanism 44 so that the acceleration control or the deceleration control of the EGR blower 38 is facilitated. As a result, the adjustment of the supply amount of the EGR gas E into the cylinder 12 is facilitated and it is possible to set the supply amount optimum for a NOₓ reduction.

### (Third Embodiment)

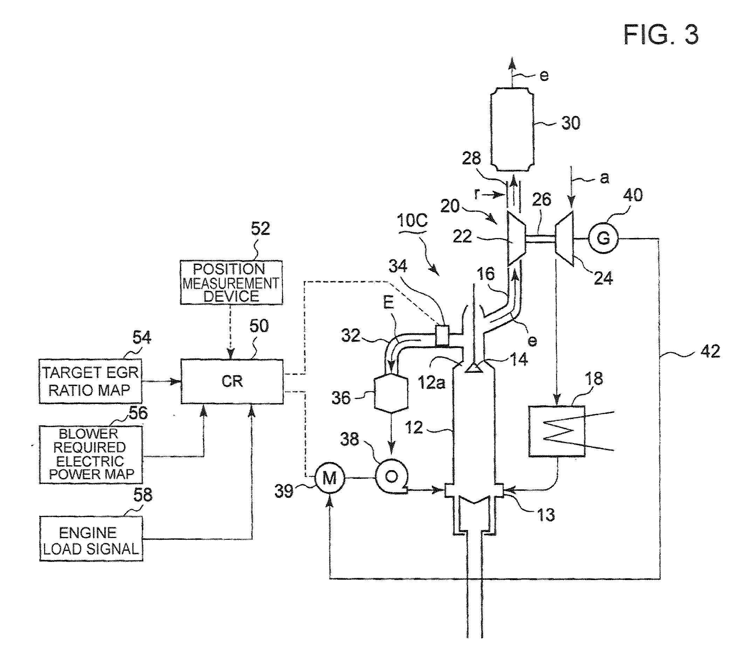

Next, a description is given of a third embodiment of the device of the present invention on the basis of FIGS. 3 to 6. The structures of a marine diesel engine 10C and its exhaust gas treatment device of the present embodiment are the same as those of the marine diesel engine 10A of the first embodiment, and have the EGR system and SCR system having the same structures as those of the marine diesel engine 10A.
In FIG. 3, the marine diesel engine 10C of the present embodiment includes a controller 50 and a position measurement device 52 that measures the position of a ship on which the marine diesel engine 10C is mounted such as a GPS or the like. In addition, a target EGR ratio map 54 and a blower required electric power map 56 are pre-prepared and stored in a storage device of the controller 50.

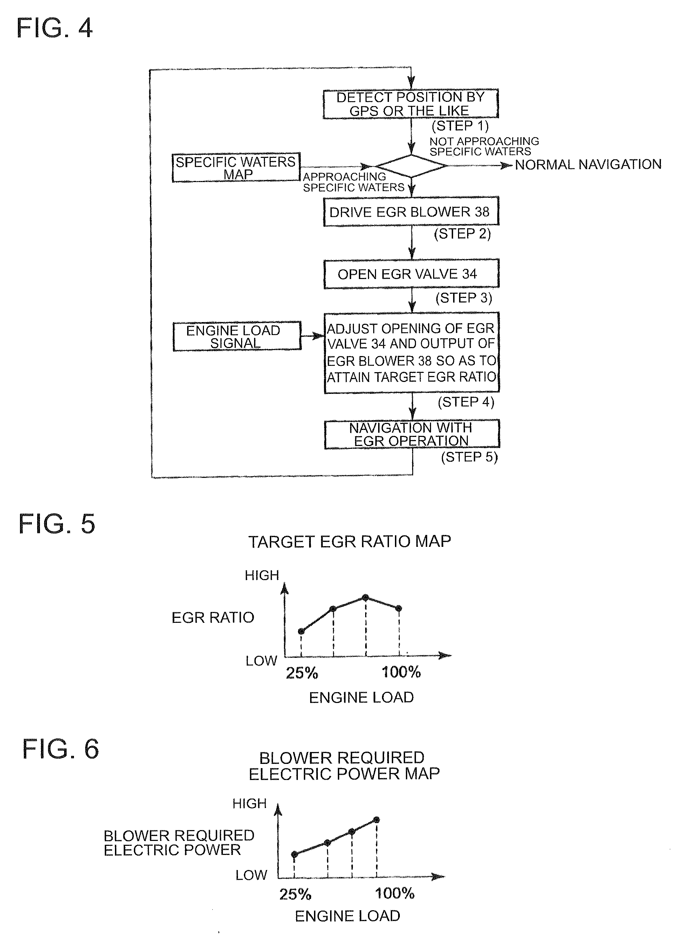

As shown in FIG. 5, the target EGR ratio map 54 is a map showing a correlation between an engine load value and a required EGR ratio (a ratio of the amount of the EGR gas to the total amount of the exhaust gas). The required EGR ratio is set in correspondence to the engine load value, and is an EGR ratio corresponding to the optimum amount of the EGR gas that allows a reduction in the NOₓ amount in the exhaust gas e.

As shown in FIG. 6, the blower required electric power map 56 is a map showing a correlation between the engine load value and a required driving speed (required electric power) of the EGR blower 38. The required driving speed (required electric power) is set in correspondence to the engine load value, and is the optimum driving speed (required electric power) of the EGR blower 38 that allows a reduction in the NOₓ amount in the exhaust gas e.

In the structure described above, first, an engine load signal 58 is inputted to the controller 50 and, in the controller 50, the optimum EGR ratio and blower required electric power obtained from the maps are selected in correspondence to the inputted engine load value. The controller 50 controls the opening of the EGR valve 34 and the drive motor 39 so as to attain the selected EGR ratio and blower required electric power.

Next, a description is given of operational procedures of the present embodiment on the basis of FIG. 4. In FIG. 4, first, the position of a ship is detected by using the position measurement device 52 such as the GPS or the like (Step 1). On the basis of the detection result, when the ship is approaching specific waters where exhaust emission control is especially severe, the EGR blower 38 is driven. When the ship is not approaching the specific waters, normal navigation is performed (Step 2). When the ship is approaching the specific waters, the EGR valve 34 is further opened (Step 3).

Next, the engine load signal is inputted to the controller 50, and the controller 50 controls the opening of the EGR valve 34 and the driving speed of the EGR blower 38 so as to attain the target EGR ratio and the blower required electric power corresponding to the engine load signal (Step 4). In this state, the ship navigates in the specific waters (Step 5). Subsequently, the operational procedures return to Step 1 and, when the ship moves out of the specific waters, the navigation returns to the normal navigation.

According to the present embodiment, it is possible to operate the exhaust gas treatment device in correspondence to waters having different exhaust emission control regulation values, and satisfy the different exhaust emission control regulation values.
Even when the ship navigates in specific waters where the exhaust emission control is especially severe, on the basis of the pre-prepared target EGR ratio map 54 and the blower required electric power map 56, it is possible to control the EGR gas amount such that the NOₓ amount in the exhaust gas can be reduced, and hence it is possible to satisfy the exhaust gas emission control standard in the specific waters. In addition, it is possible to automate and perform the control without depending on an engineer.

Note that, in each of the above-described embodiments, although the present invention is applied to the marine diesel engine, the use of the present invention is not limited to the marine diesel engine, and can be applied to, e.g., a diesel engine mounted on an automobile or the like.

### INDUSTRIAL APPLICABILITY

According to the present invention, in a diesel engine equipped with a turbocharger, it is possible to achieve a NOₓ reduction in exhaust gas, and also attain energy conservation and a CO₂ reduction.

## Claims

1. An exhaust gas treatment device which comprises a circulation path that circulates a part of exhaust gas of a diesel engine equipped with a turbocharger to an intake path, and which is configured to reduce a combustion temperature by circulating the part of the exhaust gas to the intake path via the circulation path to thereby suppress occurrence of NOₓ,
the exhaust gas treatment device further comprising:
a blower provided in the circulation path; and
a power extraction device that is connected to a power transmission shaft of the turbocharger coupling a compressor and a turbine to obtain power from the power transmission shaft, wherein
the blower is driven by the power extracted by the power extraction device to increase a pressure of the exhaust gas supplied to the intake path to be higher than an intake pressure.

2. The exhaust gas treatment device according to claim 1, wherein
the power extraction device is an electric generator and the blower is driven by electric power obtained by the electric generator.

3. The exhaust gas treatment device according to claim 1, wherein
the power extraction device is a mechanical power transmission mechanism that transmits rotation of the power transmission shaft of the turbocharger to a drive shaft of the blower to drive the drive shaft.

4. The exhaust gas treatment device according to any one of claims 1 to 3, further comprising:
a pre-prepared correlation map that indicates a correlation among a load of the diesel engine, an exhaust gas circulation amount required in correspondence to the load, and a blower driving speed corresponding to the exhaust gas circulation amount; and
a controller that controls the blower driving speed based on the correlation map.

5. The exhaust gas treatment device according to claim 4, wherein
the diesel engine is a marine diesel engine, a position measurement device is further provided that measures a navigation position of a ship on which the marine diesel engine is mounted, and the controller controls the blower driving speed when the position measurement device detects an entry of the ship into exhaust emission control waters.

6. The exhaust gas treatment device according to any one of claims 1 to 5, wherein
a catalytic converter containing a selective reduction catalyst is provided in an exhaust gas path on a downstream side of the turbine of the turbocharger, to remove NOₓ in the exhaust gas flowing in the exhaust gas path on the downstream side.
